Europäisches Patentamt

European Patent Office

Office européen des brevets

(19)

(11) Numéro de publication: **0 167 550**
**B1**

# (12) FASCICULE DE BREVET EUROPÉEN

(45) Date de publication du fascicule du brevet:
21.06.89

(51) Int. Cl.⁴: **G 01 P 5/06**

(21) Numéro de dépôt: 85900041.6

(22) Date de dépôt: 19.12.84

(86) Numéro de dépôt international:
PCT/CH 84/00199

(87) Numéro de publication internationale:
WO 85/02910 (04.07.85 Gazette 85/15)

(54) **APPAREIL POUR MESURER ET AFFICHER LA VITESSE D'UNE EMBARCATION, NOTAMMENT D'UNE PLANCHE A VOILE.**

(30) Priorité: 22.12.83 FR 8320750

(43) Date de publication de la demande:
15.01.86 Bulletin 86/3

(45) Mention de la délivrance du brevet:
21.06.89 Bulletin 89/25

(84) Etats contractants désignés:
CH DE FR GB LI

(56) Documents cité:
EP-A-0 095 040
WO-A-83/02515
US-A-4 159 644

(73) Titulaire: LAFORGE, Eric, Avenue Haldimand 27,
CH- 1400 Yverdon (CH)
Titulaire: CARRARD, Jean- Daniel, Chalamont 1,
CH- 1400 Yverdon (CH)

(72) Inventeur: LAFORGE, Eric, Avenue Haldimand 27,
CH- 1400 Yverdon (CH)
Inventeur: CARRARD, Jean- Daniel, Chalamont 1,
CH- 1400 Yverdon (CH)

(74) Mandataire: Nithardt, Roland, CABINET ROLAND
NITHARDT Attn: Cabinet MOSER & CIE Rue
Edouard Verdan 15, CH- 1400 Yverdon- les- Bains
(CH)

## Description

La présente invention concerne un appareil pour mesurer et afficher la vitesse d'une embarcation, notamment d'une planche à voile, comportant une hélice immergée montée sur un pivot qui est tracté par l'embarcation au moins un aimant permanent solidaire de l'hélice, ses pôles étant diamètralement opposés par rapport à l'axe de rotation de l'hélice, et un dispositif de mesure monté sur l'embarcation à distance de l'hélice et comportant une source de courant continu, un organe pour induire un signal électrique représentatif des variations du champ magnétique engendrées par la rotation de l'aimant, au moins un organe d'amplification pour amplifier ce signal et un organe d'affichage de la vitesse mesurée.

On connait déjà, pour mesurer et afficher la vitesse d'une embarcation, divers types de lochs à hélice qui sont reliés à un indicateur de vitesse situé à bord de l'embarcation par une ligne de transmission mécanique ou électrique. Avec ces appareils, le fait que la ligne de transmission traverse la coque de l'embarcation s'accompagne de problèmes d'étanchéité et rend l'entretien plus difficile. Pour remédier à ce problème, on a conçu des appareils dans lesquels l'hélice est solidaire d'un aimant permanent dont le champ tournant induit, à travers une coque réalisée en matériaux non ferromagnétiques, une tension électrique dans une ou des bobines montées à l'intérieur de la coque, c'est-à-dire à une distance relativement importante de l'aimant.

Le brevet américain No 4 159 644 décrit un appareil de ce genre, dans lequel les variations du champ magnétique sont détectées au moyen d'une combinaison de deux magnétomètres qui sont excités par un courant alternatif. En présence d'un champ magnétique, on obtient à la sortie des magnétomètres une tension dont l'amplitude et la polarité représentent la différence entre les composantes axiales du champ dans les deux magnétomètres. Ce dispositif permet de détecter la fréquence de rotation de l'aimant en éliminant les effets parasites des champs magnétiques dont les composantes sont égales simultanément dans les deux magnétomètres, par exemple le champ terrestre. Dans cette réalisation, ce dispositif complexe est nécessaire pour détecter les variations du champ de l'aimant à une distance suffisante et quand celui-ci tourne à faible vitesse. En effet, l'intensité du champ magnétique décroît si rapidement avec la distance que ses variations ne peuvent pas être détectées de manière fiable au moyen des bobines d'induction usuelles à des distances de l'ordre du décimètre et avec des fréquences relativement basses. Ainsi, cet appareil comporte des organes de détection relativement complexes et coûteux. En outre, il doit être excité par un courant alternatif qui n'est en général pas à disposition sur un dériveur léger et pas du tout sur une planche à voile.

De son côté le EP-A-0 095 040 décrit un appareil dont le dispositif de mesure est divisé en une première partie comportant une bobine immergée à proximité immédiate d'une roue équipée d'un aimant, et une seconde partie émergée comportant les moyens d'amplification et d'affichage. Cela nécessite un boîtier spécial qui est fixé sous l'embarcation pour contenir à la fois la roue et la première partie du dispositif et qui peut facilement être endommagé. La transmission d'impulsions représentatives de la vitesse de la roue, entre les deux parties du dispositif, se fait sans fil par voie électromagnétique et peut donc être perturbée par interférence avec des fréquences extérieures.

Par conséquent, le but de la présente invention consiste à fournir un appareil simple et peu coûteux, de préférence amovible, permettant de mesurer et afficher la vitesse sur une embarcation dépourvue de source d'énergie électrique, notamment une planche à voile, et n'exigeant pas de transmission mécanique ou électrique ni de percement de la coque.

Dans ce but, l'objet de la présente invention est un appareil du type mentionné plus haut, caractérisé en ce que l'organe pour induire le signal électrique se compose d'une unique bobine pourvue d'au moins 10'000 spires et reliée électriquement à un fréquencemètre pour déterminer la fréquence du signal après amplification, et en ce que ladite source de courant est une source de courant continu.

Selon une forme de réalisation préférée, la source de courant continu est constituée par des cellules photovoltaïques, et l'organe d'affichage est du type à cristaux liquides.

Comme le dispositif de mesure peut ne comporter aucune liaison mécanique ou électrique avec l'extérieur, en particulier s'il est alimenté par des piles de longue durée ou par des cellules photovoltaïques, l'appareil peut comporter un boîtier étanche qui est muni d'une fenêtre transparente et qui renferme la totalité du dispositif de mesure, y compris la source de courant continu. Réalisé sous forme miniaturisée, ce boîtier peut être monté de manière amovible sur l'embarcation grâce à un dispositif de fixation rapide, pour être emporté par l'utilisateur lorsque celui-ci quitte l'embarcation. Selon une autre variante de montage, le boîtier peut être encastré dans la partie supérieure de la structure d'une planche à voile.

La présente invention et ses avantages seront mieux compris en référence à la description d'une forme de réalisation préférée donnée ci-dessous à titre d'exemple, et au dessin annexé dans lequel:

La fig. 1    est une vue en coupe longitudinale d'une hélice équipée d'un aimant correspondant à une première forme de réalisation de l'appareil selon l'invention,

La fig. 2    est une vue, analogue à celle de la fig. 1, et représentant une hélice correspondant à un mode de réalisation préféré de l'appareil selon l'invention,

La fig. 3  est un schéma-bloc du dispositif de mesure,

La fig. 4  est une vue frontale du boîtier renfermant le dispositif de mesure,

La fig. 5  est une vue en coupe schématique du boîtier de la fig. 4, et

La fig. 6  est un exemple d'une disposition de l'appareil sur une planche à voile.

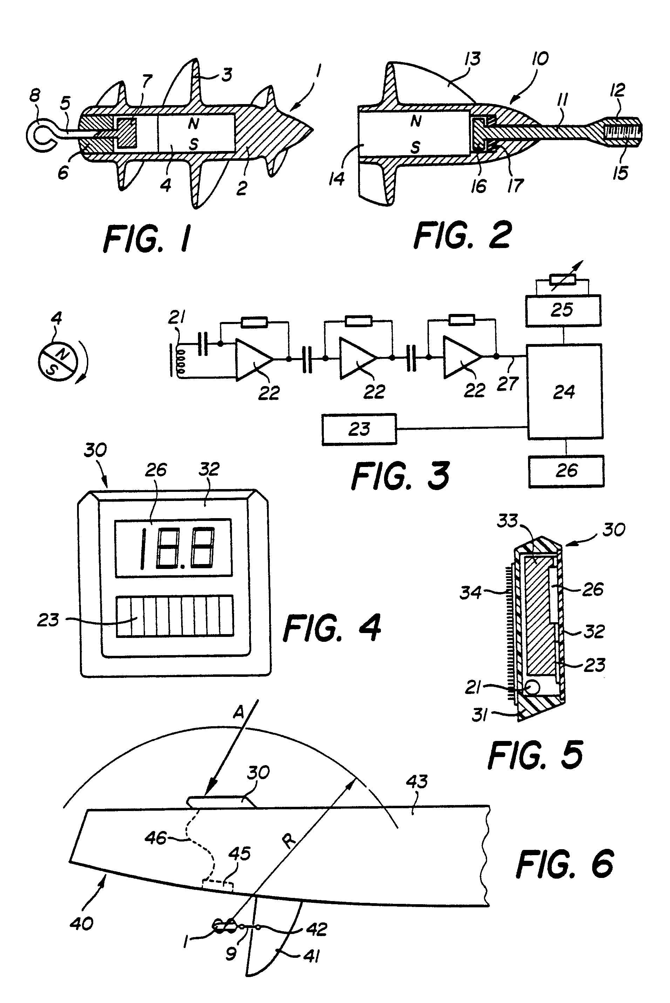

L'hélice 1 représentée sur la fig. 1 comporte un corps monobloc comprenant une partie centrale 2 de forme allongée et évidée axialement, et une double ailette hélicoïdale 3 dont le pas est égal à 25 mm. Ce corps est réalisé en matière synthétique. Un aimant permanent 4 de forme cylindrique se trouve fixé dans l'évidement axial du corps de l'hélice. Cet aimant est polarisé dans le sens transversal, c'est-à-dire selon un diamètre du cylindre: il peut être bipolaire ou multipolaire. La partie avant de l'hélice 1 comporte un pivot comprenant une tige métallique 5 qui tourne librement dans un alésage axial d'une douille cylindrique 6. Cette douille 6, réalisée en métal ou en matière synthétique, est fixée dans l'évidement axial du corps de l'hélice, et peut avantageusement être remplacé par un corindon synthétique ou similaire.

A l'intérieur de cet évidement, la tige 5 du pivot comporte une butée 7 qui peut s'appuyer contre l'extrémité de la douille 6. L'autre extrémité de la tige 5 est repliée en forme de crochet 8 pour permettre d'accrocher l'hélice à l'embarcation. Les matériaux utilisés pour la tige 5 et la douille 6 sont choisis de manière à présenter un faible coefficient de frottement.

L'hélice 1, avec son pas relativement court, est conçue pour la mesure des vitesses faibles et modérées qui sont généralement pratiquées avec une planche à voile. Elle convient de façon optimale à la détection des vitesses comprises approximativement entre 0,5 et 10 noeuds. Pour des mesures dans une gamme de vitesses plus élevées, on peut utiliser une hélice telle que représentée sur la fig. 2. Cette hélice 10 comporte une double ailette hélicoïdale 13 dont le pas est par exemple égal à 100 mm. Tournant ainsi cinq fois plus lentement que l'hélice 1, cette hélice présente une usure beaucoup plus faible aux vitesses élevées. En principe, son aimant 14 est identique à celui de l'hélice 1, mais ici un aimant multipolaire est spécialement avantageux pour faciliter la mesure des faibles vitesses. La fixation de l'hélice 10 s'effectue au moyen d'une tige 11 dont la tête 12 est pourvue d'un alésage fileté 15 et qui comporte à son extrémité opposée à la tête, une butée 16 agencée pour s'appuyer sur une butée 17.

Une grande partie de l'hélice peut être réalisée en un matériau léger et elle peut même comporter des évidements étanches, de façon à présenter une masse volumique apparente voisine de celle de l'eau. Ainsi, l'hélice fixée à l'embarcation s'oriente dans le sens d'écoulement de l'eau déjà aux faibles vitesses de déplacement.

Le dispositif de mesure représenté par le schéma-bloc de la fig. 3 est disposé à bord de l'embarcation, à une distance de l'aimant 4 pouvant aller jusqu'à plusieurs décimètres. Pour détecter en un point fixe de l'embarcation les variations périodiques du champ magnétique, causées par la rotation de l'aimant 4, le dispositif comprend une bobine 21 comportant plusieurs dizaines de milliers de spires et un noyau magnétisable. Dans l'exemple décrit ici, la bobine 21 comporte 20'000 spires de fil de cuivre de 0,02 mm de diamètre. La faible tension induite dans la bobine 21 est fortement amplifiée par une chaîne comportant dans ce cas trois organes d'amplification, par exemple des amplificateurs opérationnels 22 à très faible consommation de courant. Chacun des amplificateurs opérationnels 22 est combiné avec un circuit filtre afin d'éliminer la composante basse fréquence générée par la bobine lors de ses propres mouvements dans le champ magnétique terrestre. Une batterie de cellules photovoltaïques 23 exposées à la lumière ambiante alimente l'ensemble du dispositif de mesure. Lorsque l'aimant 4 est en rotation, ce montage produit, à la sortie 27 du dernier amplificateur opérationnel, un signal électrique carré dont la fréquence correspond à la vitesse de rotation de l'hélice.

Ce signal carré est transmis à un fréquencemètre 24 connu en soi, raccordé à une base de temps 25 à quartz ou réglable pour permettre l'étalonnage de l'appareil. Le fréquencemètre 24 comprend un décodeur qui commande une unité d'affichage 26 à cristaux liquides. L'ensemble du fréquencemètre est réalisé au moyen de circuits du type CMOS à très faible consommation d'énergie, afin d'utiliser une alimentation de faible puissance par la batterie 23 de cellules photovoltaïques.

Le boîtier étanche 30 représenté sur les figures 4 et 5 renferme la totalité du dispositif de mesure illustré par la fig. 3. Il comprend un corps 31 de forme générale aplatie, dont une ouverture frontale est obturée par une plaque transparente 32 scellée de façon étanche sur le corps du boîtier. De préférence, le corps 31 et la plaque transparente 32 sont réalisés en matière synthétique.

La face frontale du boîtier 30, représentée en particulier sur la fig. 4, laisse apparaître derrière la plaque transparente 32 une unité d'affichage 26 et la batterie 23 de cellules photovoltaïques.

Le circuit électronique peut être noyé dans un bloc de résine 33 qui est fixé dans le boîtier 30, de même que la bobine 21. Il peut également être collé au fond du boîtier pour rendre l'ensemble insubmersible et diminuer les risques de perte.

Dans cet exemple, le boîtier 30 est conçu pour être amovible. En effet, sa taille inférieure à celle d'un paquet de cigarettes et son faible poids permettent à l'utilisateur de le transporter facilement dans une poche lorsqu'il quitte son embarcation, et de mettre ainsi son appareil à l'abri du vol ou des déprédations. A cet effet, le dos du boîtier 30 comporte un organe d'accrochage rapide 34, de type connu, qui s'accroche par pression sur un organe correspondant fixé à l'embarcation à l'emplacement voulu. Ce dispositif d'accrochage facilite également le transfert de l'appareil de mesure d'une embarcation à une autre.

La fig. 6 illustre schématiquement une disposition préférée de l'appareil selon l'invention sur une planche à voile 40. L'hélice 1 est accrochée au moyen d'une attache 9 de type connu, par exemple une pièce fileté et un fil souple, à un aileron arrière 41 de la planche, cet aileron étant percé d'un trou 42 à proximité de son bord de fuite.

Le boîtier 30 renfermant le dispositif de mesure et notamment l'organe d'affichage, se trouve fixé sur la surface supérieure 43 de la planche à voile, de façon à être bien visible par le navigateur. La distance maximale entre le boîtier 30 et l'hélice 1 varie notamment en fonction de la plus faible vitesse à mesurer. Avec l'exemple de réalisation décrit ici, il s'avère qu'avec une hélice 1 au pas de 25 mm et un aimant bipolaire par exemple en samarium-cobalt, cette distance maximale est d'environ 25 cm pour une vitesse limite inférieure de 1 noeud. Si l'on se contente de mesurer les vitesses à partir de 2 noeuds, cette distance maximale est supérieure à 50 cm. Dans le cas de la fig. 6, le rayon A égal à 50 cm montre que la position du boîtier 30 peut être choisie librement dans une zone relativement étendue, tout en permettant au navigateur de lire, dans la direction de la flèche A, la vitesse affichée par l'appareil.

A ce propos, il faut relever que des essais, effectués avec une autre variante de réalisation du dispositif comportant notamment un aimant de caractéristiques supérieures, ont démontré que l'appareil pouvait fonctionner de manière suffisamment précise quand on augmente la distance entre la bobine et l'aimant jusqu'à une valeur de 1,70 m.

Du fait que, grâce à l'alimentation par cellules photovoltaïques le boîtier 30 peut être scellé à demeure, on peut l'encastrer dans la partie supérieure de la structure de la planche à voile lors de la construction de cette dernière, la face frontale du boîtier étant à fleur de la surface supérieure de la planche. Avec cette disposition, le boîtier est parfaitement protégé contre le chocs, la perte ou le vol.

Comme le montre la description ci-dessus, l'appareil selon l'invention est particulièrement adapté à la mesure de la vitesse d'une planche à voile. Cependant, il est tout aussi bien utilisable pour mesurer la vitesse d'un dériveur léger, monocoque ou multicoque, ou même d'une embarcation plus importante à condition que l'appareil de mesure soit placé, par rapport à l'hélice 1, à une distance inférieure au rayon maximum A et que la coque de l'embarcation ne soit pas ferromagnétique. Sur les embarcations légères, on appréciera particulièrement le fait que l'hélice et le boîtier de l'appareil sont aisément amovibles et interchangeables. Sur les embarcations plus importantes, il peut être avantageux de dissocier les fonctions de mesure et d'affichage dans deux boitiers différents, avec une transmission des résultats entre les deux boîtiers qui peut s'effectuer par exemple par câble ou par ultrasons. Dans un tel cas, l'organe d'affichage peut être incorporé dans un tableau de bord ou être porté par exemple au poignet par un navigateur.

Combiné avec un capteur adéquat équipé d'un aimant, un dispositif de mesure identique peut être utilisé pour mesurer et afficher la vitesse du vent, d'un skieur, d'une bicyclette, d'une aile delta, d'un avion du type ULM ou de tout véhicule dépourvu d'une source de courant électrique. Dans ce cas, le boîtier 30 reste inchangé, mais l'hélice représentée par les figures 1 et 2 est remplacée par une hélice à pales multiples montées sur un axe rotatif porté par des pierres perforées servant de paliers, montées sur un support.

Dans le cas où le boîtier est monté sur un dériveur, à une distance supérieure au champ de rayonnement magnétique, on peut placer au fond du dériveur un détecteur 45 tel que représenté en traits interrompus sur la fig. 6 qui est relié par un câble 46 au boîtier 30.

**Revendications**

1. Appareil pour mesurer et afficher la vitesse d'une embarcation, notamment d'une planche à voile, comportant une hélice immergée montée sur un pivot qui est tracté par l'embarcation, au moins un aimant permanent solidaire de l'hélice, ses pôles étant diamètralement opposés par rapport à l'axe de rotation de l'hélice, et un dispositif de mesure monté sur l'embarcation à distance de l'hélice et comportant une source de courant continu, un organe pour induire un signal électrique représentatif des variations du champ magnétique engendrées par la rotation de l'aimant, au moins un organe d'amplification pour amplifier ce signal et un organe d'affichage de la vitesse mesurée, caractérisé en ce que l'organe pour induire ledit signal électrique se compose d'une unique bobine (21) pourvue d'au moins 10'000 spires et reliée électriquement à un fréquencemètre (24) pour déterminer la fréquence du signal après amplification.

2. Appareil selon la revendication 1, caractérisé en ce que la source de courant continu est constituée par une batterie de cellules photovoltaïques (23).

3. Appareil selon la revendication 2, caractérisé en ce que l'organe d'affichage (26) est du type à cristaux liquides.

4. Appareil selon l'une quelconque des revendications précédentes, caractérisé en ce qu'il comporte un boîtier étanche (30) qui est muni d'une fenêtre transparente (32) et qui renferme la totalité du dispositif de mesure y compris la source de courant continu (23).

5. Appareil selon la revendication 4, caractérisé en ce que le boîtier (30) est monté de manière amovible sur l'embarcation (40).

6. Appareil selon la revendication 4, caractérisé en ce que le boîtier (30) est encastré dans la partie supérieure de la structure d'une planche à voile.

7. Appareil selon la revendication 1, caractérisé en ce que le dispositif de mesure comprend un boîtier (30) et un détecteur (45) relié au boîtier par un câble souple (46), le détecteur (45) étant placé dans le champ de rayonnement magnétique de l'aimant de l'hélice (1) et le boîtier (30) étant disposé hors de ce champ.

**Patentansprüche**

1. Vorrichtung zum Messen und Anzeigen der Geschwindigkeit eines Wasserfahrzeuges, insbesondere eines Windsurfbrettes, bestehend aus einem auf einen vom Wasserfahrzeug gezogenen Drehzapfen montiertes eingetauchtes Schraubenrad, mindestens einem mit dem Schraubenrad formschlüssig verbundenen Permanentmagneten, dessen Pole diametral gegenüber stehen und eine auf dem Wasserfahrzeug in einem Abstand von dem Schraubenrad montierten eine Gleichstromquelle enthaltenden Messvorrichtung, des weiteren eine Einrichtung, um ein elektrisches Signal zu bewirken, das typisch ist für die Veränderungen des von der Rotation des Magneten erzeugten Magnetfeldes, mindestens eine Verstärkungseinrichtung, um dieses Signal zu verstärken, und eine Anzeigeeinrichtung für die gemessene Geschwindigkeit,
dadurch gekennzeichnet daß
die Einrichtung zum Bewirken des elektrischen Signals aus einer einzigen Spule (21) besteht, die mit mindestens 10.000 Windungen versehen und elektrisch an einen Frequenzmesser (24) angeschlossen ist, um nach der Verstärkung die Frequenz zu bestimmen.

2. Vorrichtung nach Anspruch 1,
dadurch gekennzeichnet daß
die Gleichstromquelle aus einer Batterie von galvanischen Zellen (23) besteht.

3. Vorrichtung nach Anspruch 2,
dadurch gekennzeichnet daß
es sich bei der Anzeigevorrichtung (26) um Flüssigkristalle handelt.

4. Vorrichtung nach einem der vorhergehenden Ansprüche,
dadurch gekennzeichnet daß sie ein dichtes mit einem durchsichtigen Fenster (32) versehenes Gehäuse (30) aufweist, welches die gesamte Meßeinrichtung einschließlich der Gleichstromquelle (23) beinhaltet.

5. Vorrichtung nach Anspruch 4,
dadurch gekennzeichnet daß
das Gehäuse (30) abnehmbar am Wasserfahrzeug (40) montiert ist.

6. Vorrichtung nach Anspruch 4,
dadurch gekennzeichnet daß
das Gehäuse (30) in den oberen Teil der Struktur eines Windsurfbrettes eingelassen ist.

7. Vorrichtung nach Anspruch 1,
dadurch gekennzeichnet daß
die Meßeinrichtung ein Gehäuse (30) und einen mit dem Gehäuse über ein flexibles Kabel (46) verbundenen Meßfühler (45) aufweist, wobei der Meßfühler (45) im magnetischen Strahlungsfeld des an dem Schraubenrad (1) befestigten Magneten plaziert und das Gehäuse (30) außerhalb dieses Feldes angeordnet ist.

**Claims**

1. Apparatus for measuring and displaying the speed of a craft, especially of a sailboard, comprising an immersed rotator which is pivotally mounted and arranged to be drawn by the craft, at least one permanent magnet integral with the rotator, its poles being diametraily opposite with respect to the axis of rotation of the rotator, and a measuring device equipped with a display unit and arranged to be mounted on the craft, and comprising a source of continuous current, a device to induce and electrical signal which represents magnetic field variations generated by rotation of the magnet, at least one amplifying device for amplifying said signal and a display unit of the measured speed, characterized in that the device to induce said electrical signal comprises only one coil (21) provided with at least 10,000 turns and electrically joined with a frequency meter (24) for determining the frequency of said signal after amplification.

2. Apparatus according to claim 1, characterized in that the source of continuous current is consisting of a battery of photovoltaic cells (23).

3. Apparatus according to claim 2, characterized in that the display unit (26) is of the liguid crystal type.

4. Apparatus according to any one of the preceding claims, characterized in that it comprises a sealed box (30) which is provided wich a transparency window (32) and encloses the whole measuring, device including the source of continuous current (23).

5. Apparatus according co claim 4, characterized in that said box (30) is arranged so as co be removably mounted on che craft (40).

6. Apparatus according co claim 4 characterized in that said box (30) is embedded in the upper part of the structure of a sailboard.

7. Apparacus according co claim 1, characterized in that the measuring device comprises a box (30) and a detector (45) which is connected to the box by a flexible cable (46), said detector (45) being placed in the field of magnetic action of the magnet of said rotator (1), and said box (30) being disposed outside said field.

FIG. 1

FIG. 2

FIG. 3

FIG. 4

FIG. 5

FIG. 6